# EUROPÄISCHE PATENTSCHRIFT

(11) **EP 4 087 714 B1**
(45) Veröffentlichungstag und Bekanntmachung des Hinweises auf die Patenterteilung: **10.06.2026**
(21) Anmeldenummer: 21701665.8
(22) Anmeldetag: 07.01.2021
(51) Int. Cl.: B27N 3/28, B29C 48/11, B30B 11/26, B27N 3/02, B27N 3/18, B27N 5/02, B27N 5/00

(54) **STRANGPRESSEINRICHTUNG, STRANGPRESSPRODUKT UND VERFAHREN**
EXTRUSION PRESS DEVICE, EXTRUSION PRODUCT, AND METHOD
PRESSE DE FILAGE PAR EXTRUSION, PRODUIT EXTRUDÉ ET PROCÉDÉ

(30) Priorität: 10.01.2020 DE 202020100117 U
(43) Veröffentlichungstag der Anmeldung: 16.11.2022
(73) Patentinhaber: Pattis, Reto, 7550 Scuol (CH)
(72) Erfinder: PFEIFER, Clemens, 6460 Imst (AT); PATTIS, Reto, 7550 Scuol (CH)
(74) Vertreter: ERNICKE Patent- und Rechtsanwälte PartmbB
(86) Internationale Anmeldenummer: PCT/EP2021/050174
(87) Internationale Veröffentlichungsnummer: WO 2021/140145

(56) Entgegenhaltungen:
- EP-A1- 0 084 640
- EP-A1- 3 199 014
- EP-A2- 0 339 495
- EP-B1- 0 084 640
- DE-U1- 202009 012 239

## Beschreibung

Die Erfindung betrifft eine Strangpresseinrichtung, ein Strangpressprodukt und ein Herstellverfahren mit den Merkmalen im Oberbegriff der selbstständigen Ansprüche.

Aus der EP 3 199 014 A1, die den Oberbegriff des Anspruchs 1 offenbart, und der DE 20 2009 112 239 U1 ist es bekannt, gelochte Palettenklötze mit einer Strangpresseinrichtung herzustellen und dabei im Strang mittels eines Pressdorns einen über die gesamte Stranglänge durchgängigen inneren röhrenartigen Hohlraum mit offenen Stirnseiten zu bilden. Die Palettenklötze werden aus einem losen Pressgut hergestellt, welches mit Bindemittel versehene lose pflanzliche Kleinteile, insbesondere Holzkleinteile bzw. Holzspäne, aufweist.

Die EP 0 339 495 A2 lehrt ebenfalls eine solche Strangpresseinrichtung mit einem Pressdorn, der in der Ausgangsstellung und auch beim Pressvorgang den Füll- und Pressraum durchsetzt und beim Vorschub des Pressguts mitläuft sowie anschließend in die Ausgangsstellung zurückkehrt. Mit der Strangpresseinrichtung werden Stränge und Palettenklötze mit inneren röhrenartigen, über die gesamte Stranglänge durchgängigen und stirnseitig offenen Hohlräume hergestellt.

Die EP 0 084 640 B1 befasst sich mit einer Strangpresseinrichtung, mit der Stränge mit im Querschnitt prismatischen inneren Hohlräumen hergestellt werden, wobei die Hohlräume über die gesamte Stranglänge durchgehend offen sind.

Aus der Praxis sind im Spanplattensektor außerdem Röhrenspanplatten bekannt, die ebenfalls über die Plattenlänge durchgängige und stirnseitig offene innere röhrenartige Hohlräume aufweisen und die aus dem besagten Pressgut hergestellt werden.

Es ist Aufgabe der vorliegenden Erfindung, eine verbesserte Strangpresstechnik aufzuzeigen.

Die Erfindung löst diese Aufgabe mit den Merkmalen in den selbstständigen Ansprüchen.

Die beanspruchte Strangpresstechnik, d.h. die Strangpresseinrichtung, das Herstellverfahren und das Strangpressprodukt, haben verschiedene Vorteile.

Die beanspruchte Strangpresstechnik ermöglicht die Ausbildung eines fortlaufenden Strangs, in dem ein oder mehrere innere röhrenartige Hohlräume geformt werden und stirnseitig vom Pressgut verschlossen werden. Die besagten Hohlräume werden im Pressgut geformt. Die Hohlräume befinden sich im Inneren des Strangs. Sie können abgekapselt sein. Die Hohlräume können leer oder mit einem Medium, z.B. einem Dämmmaterial, gefüllt sein.

Aus dem Strang können Strangpressprodukte mit den besagten inneren Hohlräumen und dabei geschlossenen Stirnseiten hergestellt werden. Ein Strang und ein Strangpressprodukt können aber auch zusätzlich ein oder mehrere in Längs- oder Strangpressrichtung durchgehende innere röhrenartige Hohlräume aufweisen, die an einer oder beiden Stirnseiten offen sind. Diese können als andere Hohlräume bezeichnet werden.

Die Strangpressprodukte können z.B. eine Plattenform haben. Sie können auch eine andere und ggf. profilierte Formgebung haben. Die Strangpressprodukte lassen sich als Türblätter, Regalbretter, Einlagen für Mehrschichtplatten oder dgl. einsetzen. Generell ist auch ein Einsatz zu anderen Zwecken, z.B. als Möbelteile, Wandpaneele oder dgl. möglich.

Die Strangpresseinrichtung für das besagte Pressgut weist eine Strangpresse auf, welche das zugeführte lose Pressgut verpresst und zu einem Strang formt sowie in einer Strangpressrichtung vorschiebt. Der Vorschub kann kontinuierlich oder bevorzugt intermittierend erfolgen.

Die Strangpresse weist ein Formmittel auf, das in dem Strang in Strangpressrichtung ein oder mehrere innere röhrenartige Hohlräume bildet. Beim Strangpressen wird ein Strang mit ein oder mehreren inneren röhrenartigen Hohlräumen im Pressgut geformt, welche stirnseitig vom Pressgut verschlossen werden. Das Formmittel ist aktivierbar bzw. beweglich und kann beim Strangpressen temporär zur Hohlraumbildung eingesetzt oder aktiviert werden. Wenn das Formmittel nicht eingesetzt wird oder deaktiviert ist, bewirkt dies beim Strangpressen die Bildung eines stirnseitigen Hohlraumverschlusses. Die Strangpresse ist hierfür entsprechend konstruktiv und funktional ausgebildet und insbesondere entsprechend gesteuert.

Die Strangpresse kann auch mehrere parallele Stränge bilden. Die Strangpressrichtung kann horizontal oder vertikal oder auch schräg gerichtet sein.

Beim Strangpressen kann ein Strang geformt werden, der jeweils einen massiven Strangbereich an einem oder beiden Stirnenden der ein oder mehreren inneren röhrenartigen Hohlräume aufweist. Die Strangpresse kann hierfür entsprechend ausgebildet und gesteuert sein.

Die ein oder mehreren massiven Strangbereiche bestehen aus dem besagten verdichteten Pressgut. Sie bilden auch den jeweiligen stirnseitigen Verschluss der besagten röhrenartigen Hohlräume. Sie können quer zur Strangpressrichtung ausgerichtet sein. Der jeweilige massive Strangbereich kann eine in Strangpressrichtung gesehen erhebliche Dicke aufweisen. Er kann den Strang und das Strangpressprodukt in diesem Bereich mechanisch stabilisieren. Durch einen massiven und über einen zumindest signifikanten Teil der Strangbreite reichenden Strangbereich können mehrere parallele innere röhrenartige Hohlräume stirnseitig verschlossen werden.

Beim Strangpressen kann ein Strang geformt werden, der in Strangpressrichtung mehrere hintereinander angeordnete innere röhrenartigen Hohlräumen beinhaltet. Der Strang kann jeweils einen massiven Strangbereich zwischen in Strangpressrichtung aufeinander folgenden inneren röhrenartigen Hohlräumen aufweisen. Die Strangpresse ist hierfür entsprechend ausgebildet und gesteuert.

Der massive Strangbereich zwischen mehreren hintereinander angeordneten röhrenartigen inneren Hohlräumen kann einerseits den jeweiligen stirnseitigen Verschluss dieser Hohlräume bilden. Er kann auch zwischen diesen axial beabstandeten Hohlräumen einen dichten und mechanisch stabilen sowie quer gerichteten Strangbereich aus dem besagten Pressgut bilden. Die Dicke des massiven Strangbereichs kann variieren. Der massive Strangbereich kann zumindest über einen signifikanten Teilbereich der Strangbreite reichen. Von dem massiven Strangbereich können mehrere parallele innere röhrenartige Hohlräume stirnseitig verschlossen werden.

Die aus dem quasi endlosen Strang **z.B.** durch Abtrennen hergestellten Strangpressprodukte können an einer oder beiden in Strangpressrichtung weisenden Stirnseiten einen massiven Strangbereich und eine hierdurch gebildete massive und geschlossene Produktwand aufweisen. Dies ist günstig für die weitere Bearbeitung des Strangpressprodukts, z.B. für das Anbringen eines Furniers, für das Befestigen von Anbauteilen oder dgl.. Zudem wird die mechanische Stabilität des Strangpressprodukts erhöht, insbesondere im Stirnwandbereich und ggf. an den Längsseiten. Ein zusätzlicher und stabilisierender Einbaurahmen wie bei vorbekannten Türblättern aus Röhrenspanplatten kann entfallen oder weniger aufwändig ausgebildet werden.

Ein massiver Strangbereich kann auch an anderer Stelle, z.B. an den Längsrändern des Strangpressprodukts, angeordnet sein. Ein solcher massiver Strangbereich kann als Beschlagbereich zur Aufnahme eines Beschlagteils ausgebildet sein. Dies kann z.B. ein Schloss oder eine Lagerung eines als Türblatt ausgebildeten Strangpressprodukts sein. Er eignet sich besonders für die Befestigung und für die stabile Aufnahme und Abstützung solcher Beschlagteile. Im Strang können hierfür die ein oder mehreren inneren röhrenartigen Hohlräume mit entsprechender Verteilung angeordnet sein. Sie können insbesondere von einem Seitenrand des Türblatts entsprechend weit nach innen und ggf. auch in Strangpressrichtung untereinander distanziert sein.

Die massiven und geschlossenen Stirnwände des Strangpressprodukts können durch ein entsprechendes Quertrennen des Strangs an einem massiven Strangbereich gebildet werden. Es ist aber auch möglich, ein Strangpressprodukt derart aus dem Strang abzutrennen, dass ein oder mehrere innere röhrenartige Hohlräume durchtrennt werden und eine offene Mündung an einer Stirnwand des Strangpressprodukts bilden. Es ist außerdem möglich, ein oder mehrere über die Gesamtlänge des Strangpressprodukts und auch des Strangs durchgehende innere röhrenartige Hohlräume vorzusehen, z.B. als durchgehende Kabelkanäle oder zur Aufnahme von eingesteckten Versteifungskörpern oder dgl. dienen können. Diese Hohlräume können an einer oder an beiden Stirnseiten offen sein.

Die Hohlräume können im Strang und im Strangpressprodukt in Strangpressrichtung gesehen parallel nebeneinander und gegenseitig auf gleicher Höhe angeordnet sein. Es ist auch möglich, die besagten inneren röhrenartigen Hohlräume mit einem gegenseitigen Versatz anzuordnen, insbesondere einem axialen Versatz in Strangpressrichtung.

Die besagten inneren und stirnseitig verschlossenen röhrenartigen Hohlräume können untereinander eine gleiche Länge in Strangpressrichtung aufweisen. Sie können alternativ unterschiedliche Länge haben. Die besagten Hohlräume können sowohl unterschiedliche Längen, als auch den besagten Versatz haben. Die inneren röhrenartigen Hohlräume haben in Strangpressrichtung eine gerade Erstreckung. Sie sind im Strang und im Pressgut eingebettet. Verschiedene dieser Hohlräume können in beliebiger Weise und in beliebiger Kombination miteinander im Strang und im Strangpressprodukt angeordnet werden.

Die Strangpresse weist einen Füll- und Pressraum zur Aufnahme und Verpressung des zugeführten losen Pressguts auf. In den Füll- und Pressraum kann das besagte Formmittel beim Strangpressen temporär eingebracht und auch wieder temporär entfernt werden. Das eingebrachte Formmittel erstreckt sich in Strangpressrichtung im Füll- und Pressraum. Es reicht vorzugsweise über die gesamte Raumlänge. Es kann auch über die Raumgrenze hinaus in einen anschließenden Presskanal ragen.

Das beim Strangpressen in den Füll- und Pressraum eingebrachte Formmittel dient zur Bildung der ein oder mehreren internen röhrenartigen Hohlräume. Das im Füll- und Pressraum befindliche Pressgut umgibt das Formmittel. Es wird beim Strangpressen am Formmittel entlang der Strangpressrichtung vorgeschoben und dabei verdichtet und verpresst, wobei die besagten ein oder mehreren internen röhrenartigen Hohlräume im Pressgut gebildet werden. Bei der Strangbildung wird an den bestehenden Strang rückseitig immer wieder neues Pressgut unter Bildung von Strangpressabschnitten angepresst und der Strang um eine entsprechende Hubstrecke in Strangpressrichtung vorgeschoben.

Wenn das Formmittel aus dem Füll- und Pressraum entfernt ist, kann dieser Raum vollständig mit dem Pressgut befüllt werden. Hierdurch kann ein stirnseitiger Verschluss von ein oder mehreren vorher oder nachfolgend gebildet inneren röhrenartigen Hohlräumen gebildet werden. Das Formmittel kann auch teilweise oder stellenweise aus dem Füll- und Pressraum entfernt werden, wobei der Füll- und Pressraum entsprechend teilweise oder stellenweise mit dem Pressgut befüllt werden kann.

Das Formmittel wird mittels einer Zustelleinrichtung temporär in den Füll- und Pressraum eingebracht und auch wieder temporär hieraus entfernt. Dies kann in unterschiedlicher Weise geschehen. In einer bevorzugten Ausgestaltung bewegt die Zustelleinrichtung das Formmittel in Strangpressrichtung reversierend und treibt es dabei gesteuert an.

Das Formmittel kann in beliebig geeigneter Weise ausgebildet sein. In einer vorteilhaften Ausgestaltung weist es einen oder mehrere Dorne auf, die in Strangpressrichtung ausgerichtet sind. Die Dorne können eine gerade Erstreckung und eine beliebige Querschnittsform und -größe haben. Sie können innenseitig hohl oder massiv ausgebildet sein. Ihre Außenkontur kann eine beliebige Form haben, z.B. kreisrund, oval, prismatisch oder dgl..

Die ein oder mehreren Dorne können beweglich sein, insbesondere in Strangpressrichtung. Sie können auch beim Strangpressen mitbewegt werden. Mehrere Dorne können gemeinsam beweglich angeordnet und steuerbar sein. In einer vorteilhaften Ausgestaltung können mehrere parallele Dorne unabhängig voneinander beweglich angeordnet und gesteuert werden. Das Formmittel kann dadurch teilweise oder stellenweise aus dem Füll- und Pressraum entfernt werden.

Dies ermöglicht die Bildung von inneren röhrenartigen Hohlräumen, die sich in ihrer Länge und/oder ihrer Anordnung im Strang unterscheiden. Insbesondere ist eine Versatzbildung möglich.

Ein oder mehrere Dorne können in der erwähnten Weise rohrartig ausgebildet sein. Sie können stirnseitig verschließbar oder verschlossen ausgebildet sein. Rohrartige Dorne ermöglichen die Einbringung eines Mediums beim Strangpressen in die gebildeten inneren röhrenartigen Hohlräume. Ein solches Medium kann z.B. Dampf oder ein anderes wärmeübertragendes Medium sein. Ferner können andere Medien, z.B. ein fluidisches oder granuliertes oder anderweitig geformtes Dämmmittel, in den oder die besagten Hohlräume eingebracht werden. Ein stirnseitiger Dornverschluss verhindert ein Eindringen von Pressgut beim Bilden eines stirnseitigen Verschlusses oder eines besagten massiven Strangbereichs.

Die Strangpresse kann ein angetriebenes Pressorgan aufweisen, welches das lose Pressgut verpresst und in Strangpressrichtung vorschiebt. Dies erfolgt bevorzugt intermittierend. Es kann alternativ auch kontinuierlich erfolgen. In einer vorteilhaften Ausgestaltung ist die Strangpresse als Kolbenstangenpresse ausgebildet, mit der das Pressgut intermittierend in Strangpressrichtung vorgeschoben und verpresst wird. In einer anderen Ausführung ist eine Ausbildung als Extruder mit Schnecke oder dgl. möglich, der das lose Pressgut kontinuierlich oder ebenfalls intermetierend in Strangpressrichtung fördert und verpresst.

In einer bevorzugten Ausgestaltung weist das Pressorgan einen reversierend angetriebenen Presskopf mit einem in Strangpressrichtung ausgerichteten Pressstempel auf. Der Pressstempel kann in den Füll- und Pressraum eintauchen. Er kann hieraus auch wieder zum Einfüllen des Pressguts entfernt werden. In einer Abwandlung kann ein Presskopf und/oder ein Pressstempel unterteilt oder mehrfach vorhanden sein.

In einer vorteilhaften Ausgestaltung der Strangpresse ist das Formmittel im oder am Pressstempel angeordnet. Es kann hierbei reversierend ein und ausgefahren werden. Ferner ist es günstig, wenn die Zustelleinrichtung am Presskopf angeordnet ist. Sie kann alternativ eigenständig und stationär angeordnet sein. Das Formmittel ist im oder am Pressstempel beweglich angeordnet. Es kann in Strangpressrichtung nach vorn über die Stirnwand des Pressstempels hinausragen oder an der Stirnwand enden. Die Stirnwand liegt in Strangpressrichtung vorn und wirkt auf das im Füll- und Pressraum befindliche Pressgut für dessen Vorschub und Verpressung ein. Die Stirnwand kann eine ebene oder profilierte Form haben. Sie kann quer, insbesondere senkrecht, zur Strangpress- und Vorschubrichtung ausgerichtet sein.

Beim Vorschub des Pressguts wird auch der Strang in Strangpressrichtung bewegt. Das Verpressen und Verdichten des losen Pressguts erfolgt durch ein Bremsen des Strangs gegenüber der Vorschubbewegung des losen Pressguts. Die Bremswirkung kann in einem an den Füll- und Pressraum anschließenden Presskanal mit entsprechender interner Formgebung und/oder durch eine in Strangpressrichtung nachfolgende Behandlungseinrichtung erzeugt werden.

Die Strangpresse weist eine Zuführvorrichtung für das lose Pressgut auf. Die Zuführvorrichtung kann eine Dosiervorrichtung für das lose Pressgut aufweisen. Diese kann die Befüllung des Füll- und Pressraums in Abhängigkeit von Abwesenheit oder Fehlen des Formmittels im Füll- und Pressraum steuern. Bei einem anwesenden Formmittel kann durch dessen Platzbedarf eine geringere Pressgutmenge in den Füll- und Pressraum eingebracht werden als bei einem fehlenden Formmittel. Die Dosiervorrichtung und ggf. die Zuführvorrichtung können über die Steuerung der Strangpresse entsprechend angesteuert und betätigt werden.

Die Strangpresse kann eine zuführseitige Schließvorrichtung für den Füll- und Pressraum aufweisen. Die Schließvorrichtung verschließt die zuführseitige Einfüllöffnung für das Pressgut. Die Schließvorrichtung kann in beliebig geeigneter Weise ausgebildet sein, z.B. als Schließschieber. Dieser kann translatorisch und/oder rotatorisch zum Verschließen und Öffnen bewegt werden. Er kann auch mit einer Fördereinrichtung zur Füllunterstützung für das lose Pressgut ausgestattet sein.

Der Füll- und Pressraum ist an den in Strangpressrichtung gesehenen Stirnseiten offen. Die rückwärtige Stirnseite weist zum Pressorgan und die vordere Stirnseite zu einem anschließenden Presskanal. Die anderen Seitenwände des Füll- und Pressraums können massiv und starr ausgebildet sein. Alternativ können hier bedarfsweise einfahrbare Pressstempel, Formkörper oder dgl. angeordnet sein. Diese können das im Füll- und Pressraum befindliche Pressgut an einer oder mehreren seiner Außenseiten formgebend beeinflussen.

Die Strangpresseinrichtung kann eine der Strangpresse nachgeschaltete Behandlungseinrichtung aufweisen. Diese kann z.B. eine Aktivierungs- oder Aushärtevorrichtung und/oder eine bevorzugt in Strangpressrichtung anschließende Kühlvorrichtung beinhalten.

In einer Aktivierungs- oder Aushärtevorrichtung kann das im Pressgut vorhandene Bindemittel aktiviert werden, um den Strang und das verdichtete Pressgut zu verfestigen. Die Aktivierungs- oder Aushärtevorrichtung kann z.B. eine Bedampfungseinrichtung, eine Hochfrequenzheizung, eine Mikrowellenheizung oder eine konvektive Heizeinrichtung oder dgl. für den Strang sein. Die Ausbildung der Aktivierungs- oder Aushärteeinrichtung kann sich nach der Art des Bindemittels richten. Die Kühleinrichtung ermöglicht ein Kühlen des zuvor erwärmten Strangs, was durch Luft, durch Kühlelemente oder dgl. geschehen kann.

Die Behandlungseinrichtung kann sich am Presskanal befinden, in dem der Strang in Strangpressrichtung geführt ist. Die Behandlungseinrichtung kann auch ein gesteuertes Bremsen des Strangs bewirken, z.B. durch ein oder mehrere gesteuert anpressbare bewegliche Seitenwände des Presskanals oder andere Bremsmittel.

Die Strangpresseinrichtung kann eine der Strangpresse nachgeschaltete Trenneinrichtung für den Strang aufweisen. Mit der Trenneinrichtung kann der quasi endlos von der Strangpresse produzierte Strang getrennt werden. Durch das Abtrennen von Teilbereichen des Strangs kann das besagte Strangpressprodukt gebildet werden.

Ein Trennen kann in einer Richtung quer zur Strangpresseinrichtung erfolgen. Dies schließt eine rechtwinklige oder schräge Ausrichtung bzgl. der Strangpresseinrichtung ein. Es ist außerdem möglich, eine Trennung des Strangs entlang der Strangpressrichtung vorzunehmen. Dies beinhaltet eine Ausrichtung parallel oder schräg zur Strangpressrichtung. Durch eine solche sogenannte Längstrennung können aus einem Strang mit großer Stirnfläche mehrere Strangpressprodukte mit jeweils kleinerer Stirnfläche abgetrennt werden.

Die Trenneinrichtung kann bei einer vorteilhaften Ausgestaltung derart gesteuert sein oder werden, dass die Trennung des Strangs an einem massiven Strangbereich erfolgt. Dies kann insbesondere die besagte Quertrennung des Strangs quer zur Strangpressrichtung betreffen. Bei einer sogenannten Längstrennung kann das Trennen in einem zwischen parallelen inneren röhrenartigen Hohlräumen befindlichen massiven Strangbereich erfolgen.

Die Strangpresseinrichtung kann eine der Strangpresse vorgeschaltete Aufbereitungseinrichtung für das Pressgut aufweisen. Die Aufbereitungseinrichtung kann eine Zerkleinerungseinrichtung für größere Pressgutpartikel aufweisen. Das Pressgut wird bevorzugt aus Holz gebildet. Das Holz kann Frischholz, insbesondere Sägeabfälle, oder ggf. aufbereitetes Altholz sein. Alternativ oder zusätzlich sind andere pflanzliche und bevorzugt einigermaßen formstabile Teile, **z.B.** Pflanzenstängel, Stroh oder dgl. möglich. Das Pressgut kann außer diesen Teilen auch weitere Inhaltsstoffe aufweisen.

Die Aufbereitungseinrichtung kann eine Einrichtung zur Einstellung der Partikelgröße, eine Trocknungseinrichtung oder andere Komponenten aufweisen. Die Aufbereitungseinrichtung kann außerdem eine Einrichtung zum Einbringen des besagten Bindemittels, **z.B. in** granulierter oder flüssiger Form in das lose Pressgut aufweisen.

In den Unteransprüchen sind weitere vorteilhafte Ausgestaltungen der Erfindung angegeben.

Die Erfindung ist in den Zeichnungen beispielhaft und schematisch dargestellt. Im Einzelnen zeigen:
- Figur 1:: Eine Strangpresseinrichtung mit einer Strangpresse und weiteren Komponenten in einer Seitenansicht,
- Figur 2:: eine abgebrochene und teilweise aufgeschnittene Draufsicht auf die Strangpresse gemäß Pfeil II von Figur 1,
- Figur 3 bis 5:: die Strangpresse gemäß Figur 2 in verschiedenen Betriebsstellungen und alternativen Ausbildungen,
- Figur 6:: eine abgebrochene perspektivische Ansicht eines Strangs und eines Strangpressprodukts,
- Figur 7 bis 9:: verschiedene Querschnittsvarianten des Strangs und
- Figur 10 und 11:: verschiedene Varianten für Ausbildung und Anordnung von inneren Hohlräumen im Strangpressprodukt.

Die Erfindung betrifft eine Strangpresseinrichtung (1), ein Strangpressprodukt (2) und ein Herstellverfahren für das Strangpressprodukt (2).

Das Strangpressprodukt (2) wird aus einem fortlaufenden Strang (8) mittels der Strangpresseinrichtung (1) hergestellt. Die Erfindung betrifft auch eine diesbezügliche Verwendung der Strangpresseinrichtung (1).

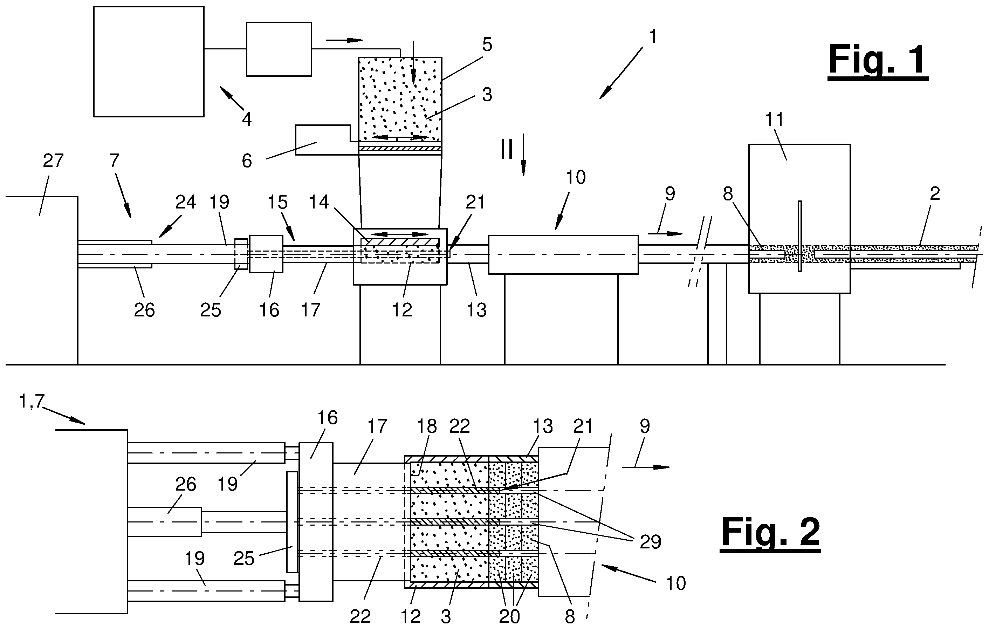

Figur 1 verdeutlicht beispielhaft die Ausbildung einer Strangpresseinrichtung (1). Sie dient zum Formen eines fortlaufenden Strangs (8) aus einem losen Pressgut (3). Das Pressgut (3) weist lose pflanzliche Kleinteile, insbesondere Holzkleinteile bzw. Holzspäne, auf, die mit einem Bindemittel versehen sind.

Beim Strangpressen wird das lose Pressgut (3) unter Bildung des Strangs (8) verpresst, verdichtet und durch Aktivierung des Bindemittels verfestigt. Beim Strangpressen wird an den bestehenden Strang (8) **z.B.** intermittierend neues Pressgut (3) rückseitig angepresst, wobei jeweils aufeinander folgende verdichtete Strangpressabschnitte (20) gebildet werden. Hierdurch wird der fortlaufende Strang (8) verlängert und jeweils um eine der Dicke des Strangpressabschnitts (20) entsprechende Hubstrecke in Strangpressrichtung (9) vorgeschoben.

Die in Figur 1 gezeigte Strangpresseinrichtung (1) weist eine Aufbereitungseinrichtung (4) für das Pressgut (3), eine Strangpresse (7) und eine nachgeschaltete Trenneinrichtung (11) für den Strang (8) auf. Der Strangpresse (7) kann auch eine Behandlungseinrichtung (10) für den Strang (8) nachgeordnet sein. Ferner ist eine Steuerung (27) vorhanden. Sie kann die Komponenten der Strangpresseinrichtung (1), insbesondere die Strangpresse (7), steuern.

Die Aufbereitungseinrichtung (4) weist **z.B.** eine Zerkleinerungseinrichtung für Frischholz oder Altholz auf, mit der Holzkleinteile, insbesondere Holzspäne, mit gleichen oder bevorzugt unterschiedlichen Partikelgrößen hergestellt werden. Diese werden anschließend getrocknet. In der Aufbereitungseinrichtung (4) wird den Holzkleinteilen bzw. Holspänen ein Bindemittel zugefügt, **z.B.** in trockener Form als Pulver oder Granulat beigemischt oder in flüssiger Form aufgesprüht. Das Bindemittel kann z.B. ein unter Wärme aushärtender Klebstoff, z.B. ein Melaminharz, ein Phenolharz, ein Harnstoffharz, ein Isocyanat oder dgl. sein. Ein Bindemittel kann auch auf Stärke und/oder Zucker und/oder anderen Kohlehydraten und/oder Lignin basieren. Das Bindemittel kann bei der Aushärtung bzw. Polymerisation Wasser oder andere Flüssigkeiten ausscheiden, z.B. bei einem Maillard-Prozess.

Die Strangpresse (7) weist eine Zuführeinrichtung (5) mit einer Dosiereinrichtung (6) für das lose partikuläre Pressgut (3) und einen Füll- und Pressraum (12) zur Aufnahme des z.B. von oben durch eine Einfüllöffnung eingebrachten Pressguts (3) auf. Die Einfüllöffnung des Füll- und Pressraums (12) kann durch eine Schließvorrichtung (14) zum Verpressen und Vorschieben des Pressguts (3) temporär verschlossen werden. Die Schließvorrichtung (14) kann als reversierend beweglicher Schließschieber, z.B. als Schwenkschieber, ausgebildet sein. Die Schließvorrichtung (14) kann Fördermittel, z.B. rotierende Paddel, aufweisen, welche die Raumbefüllung mit losem Pressgut (3) unterstützen.

Die Strangpresse (7) weist ferner ein bewegliches und gesteuert angetriebenes Pressorgan (15) sowie ein Formmittel (21) nebst einer Zustelleinrichtung (24) für das Formmittel (21) auf.

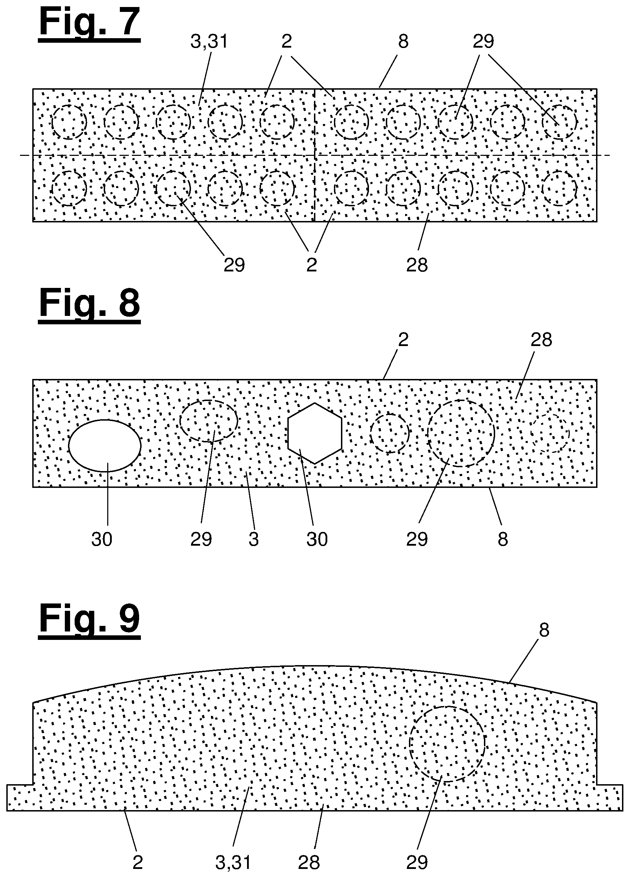

Die Strangpresse (7) erzeugt aus dem Pressgut (3) einen Strang (8), der in einer Strangpressrichtung (9) gebildet und in dieser Richtung aus dem Füll- und Pressraum (12) durch einen anschließenden Presskanal (13) vorgeschoben wird. Dessen Seitenwände formen die Außenkontur des Strangs (8). Figur 7 bis 9 zeigen verschiedene Formen des Querschnitts und der Außenkontur des Strangs (8). Der Vorschub kann kontinuierlich oder bevorzugt intermittierend erfolgen.

Das Pressorgan (15) weist einen reversierend von einem Pressantrieb (19) angetriebenen Presskopf (16) mit einem daran stirnseitig angeordneten Pressstempel (17) auf. Der Pressstempel (17) ist in Strangpressrichtung (9) ausgerichtet und weist eine Stirnwand (17) auf, mit der der Pressstempel (17) in den Füll- und Pressraum (12) durch eine rückwärtige Raumöffnung eintauchen kann. Der Presskopf ist **z.B.** als quer zur Strangpressrichtung (9) ausgebildeter Tragbalken ausgebildet. Er wird rückseitig von dem bevorzugt stationären Pressantrieb (19) mit **z.B.** zwei seitlich beabstandeten Zylindern beaufschlagt und reversierend angetrieben. Die Strangpresse (7) ist in dieser Ausführungsform als Kolbenstrangpresse ausgebildet. Der Pressantrieb (19) kann alternativ einen elektromotorischen Linearantrieb, einen Kurbelantrieb oder dgl. aufweisen.

Das Formmittel (21) ist im oder am Pressstempel (17) reversierend ausfahrbar angeordnet. Es wird von einer Zustelleinrichtung (24) in Strangpressrichtung (9) vor und zurück bewegt.

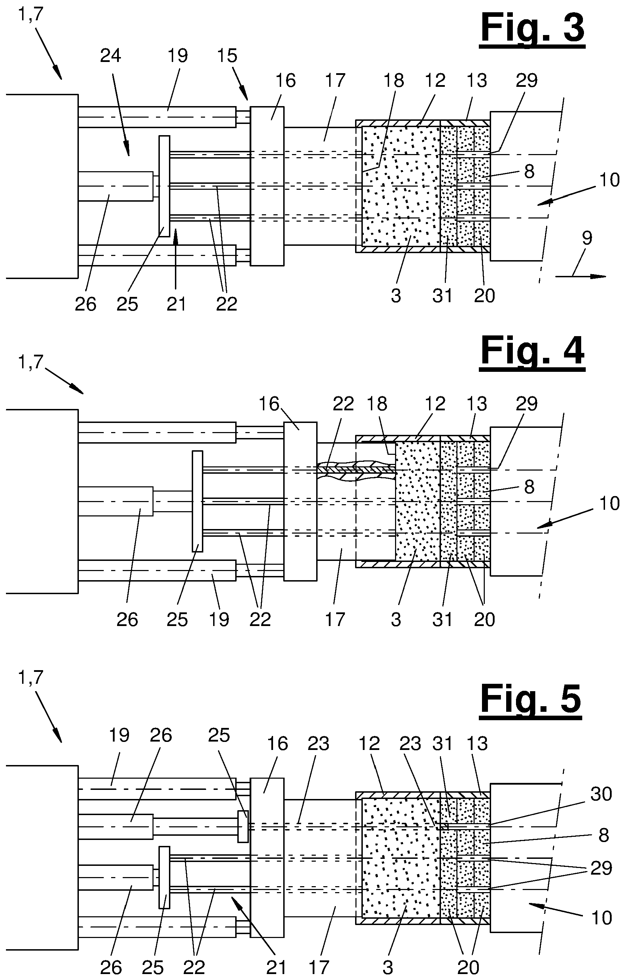

Das Formmittel (21) kann durch und aus dem Pressstempel (17) in Strangpressrichtung (9) ausgefahren werden und über dessen Stirnwand (18) hinausragen gemäß Figur **2****.** Das Formmittel (21) kann andererseits gemäß Figur 3 in den Pressstempel (17) zurückgezogen werden. Es ragt dann nicht mehr aus der Stirnwand (18) und kann mit dieser bündig abschließen. Der Pressstempel (17) kann entsprechende Aufnahmeöffnungen für das Formmittel (21) aufweisen.

Das Formmittel (21) weist **z.B.** einen oder bevorzugt mehrere in Strangpressrichtung (9) ausgerichtete massive oder hohle sowie gerade Dorne (22,23) auf. Ein hohler Dorn (22,23) kann stirnseitig einen festen oder gesteuert beweglichen Verschluss für die Dornöffnung aufweisen. Der jeweilige Dorn (22,23) hat eine formstabile Wandung.

Die ein oder mehreren Dorne (22,23) können jeweils in einer Aufnahmeöffnung des Pressstempels (17) angeordnet sein. Sie können sich beim Strangpressen zusammen, insbesondere synchron, mit dem Pressstempel (17) bewegen. Sie können auch vom Pressstempel (17) überfahren werden. Ferner ist eine andere Relativbewegung zum Pressstempel (17) möglich, **z.B.** eine Rückzugbewegung eines Dorns (22,23) beim Pressvorschub des Pressstempels (17).

Das Formmittel (21) kann ferner einen Formhalter (25) aufweisen, an dem ein oder mehrere Dorne (22,23) stirnseitig befestigt sind und in Strangpressrichtung (9) vorragen. Die Zustelleinrichtung (24) weist einen steuerbaren Antrieb (25), **z.B.** einen Zylinder, auf, der den Formhalter (24) reversierend in Strangpressrichtung (9) vor und zurück bewegt. Die Zustelleinrichtung (24) ist in Figur 1 eigenständig und stationär angeordnet. Sie kann alternativ am Presskopf (16) angeordnet sein und bei dessen Bewegungen mitgeführt werden.

Wie Figur 1 bis 4 verdeutlichen, kann das Formmittel (21) einen einzelnen Formhalter (25) mit mehreren parallelen Dornen (22) aufweisen. In Figur 5 ist eine alternative Ausführung dargestellt, bei der das Formmittel (21) zwei oder mehr getrennt voneinander und eigenständig bewegliche Formhalter (25) aufweist. Am einen Formhalter (25) sind **z.B.** zwei parallele Dorne (22) angeordnet. Der zweite Formhalter (25) trägt einen einzelnen Dorn (23). Die mehreren, **z.B.** zwei Formhalter (25) haben jeweils einen eigenen und unabhängig steuerbaren Antrieb (26).

Das **z.B.** in der erwähnten Weise von den ein oder mehreren Dornen (22,23) oder in anderer Weise ausgebildete Formmittel (21) wird von der Zustelleinrichtung (24) temporär in den Füll- und Pressraum (12) eingebracht und temporär auch wieder aus dem Füll- und Pressraum (12) entfernt. Das Formmittel (21), insbesondere die ein oder mehreren Dorne (22,23), haben eine Länge, die der Länge des Füll- und Pressraums (12) in Strangpressrichtung (9) entspricht oder größer als diese ist.

Das eingebrachte Formmittel (21) dient zur Bildung von ein oder mehreren inneren röhrenartigen Hohlräumen (29) beim Strangpressen. Diese Hohlräume (29) sind innerhalb des Strangs (8) angeordnet und haben eine gerade sowie längs der Strangpressrichtung (9) erstreckte Form. Beim Strangpressen umgibt das in den Füll- und Pressraum (12) eingebrachte lose Pressgut (3) das Formmittel (21), insbesondere die ein oder mehreren Dorne (22,23), und wird beim Pressvorschub des Pressorgangs entlang des Formmittels (21) vorgeschoben und in den in Strangpressrichtung (9) anschließenden Presskanal (13) geschoben.

Wenn das Formmittel (21), insbesondere die ein oder mehreren Dorne (22,23), aus dem Füll- und Pressraum (12) entfernt sind, kann dieser vollständig mit Pressgut (3) befüllt werden. Die Dosiervorrichtung (6) steuert entsprechend die Füllmenge des eingebrachten Pressguts (3).

Figur 2 zeigt in einer Draufsicht den Füllraum (12) mit einem eingebrachten Formmittel (21), wobei der Pressstempel (17) in die Ruhestellung zurückgezogen ist und das Formmittel (21) frontseitig aus der Stirnwand (18) in den Füll- und Pressraum (12) ragt. Beim Strangpressen werden die besagten Strangpressabschnitte (20) mit den besagten Hohlräumen (29) gebildet. Der Pressstempel (17) überfährt beim Pressvorschub in Strangpressrichtung (9) das **z.B.** still stehende Formmittel (21), insbesondere die ein oder mehreren Dorne (22,23).

Figur 3 zeigt die Anordnung von Figur 2 mit einem zurückgezogenen Formmittel (21) und einem Pressstempel (17) in Ruhestellung. Das Formmittel (21) schließt z.B. frontseitig bündig mit der Stirnwand (18) ab. Der Füll- und Pressraum (12) ist leer und kann vollständig mit losem Pressgut (3) befüllt werden.

Wenn dann gemäß Figur 4 der Pressstempel (17) in Strangpressrichtung (9) bewegt wird, wird das lose Pressgut (3) verdichtet und an den Strang (8) rückseitig angepresst. Das Formmittel (21), insbesondere die ein oder mehreren Dorne (22,23), kann beim Vorschub des Pressstempels (17) mit bewegt werden. Dabei wird eine geschlossene Stirnwand (18) gebildet. Figur 4 zeigt eine Zwischenstellung des Pressstempels (17) auf seinem Vorschubweg bis zum Stirnende des Füll- und Pressraums (12).

Bei einem zurückgezogenen oder deaktivierten Formmittel (21) wird dabei ein Strangpressabschnitt (20) gebildet, der einen massiven Strangbereich (31) darstellt. Der massive Strangbereich (31) kann gemäß Figur 3 und 4 an einen zuvor mit ein oder mehreren Hohlräumen (29) gebildeten Strangpressabschnitt (20) angepresst werden und verschließt durch seine massive Gestaltung dann das rückwärtige Stirnende der ein oder mehreren inneren röhrenartigen Hohlräume (29).

Bei der Ausführungsform von Figur 5 mit einem mehrteiligen Formmittel (21), insbesondere mit mehreren getrennt beweglichen Dornen (22,23), wird z.B. der Dorn (23) ausgefahren und in den Füll- und Pressraum (12) eingebracht, wobei die anderen Dorne (22) zurückgezogen und aus dem Füll- und Pressraum (12) entfernt werden. Bei einer solchen Konfiguration wird beim Vorschub des Pressstempels (17) ein Strangpressabschnitt (20) gebildet, der einen z.B. in Strangpressrichtung (9) axial durchgehenden inneren röhrenartigen Hohlraum (30) aufweist und ansonsten massiv ausgebildet ist. Die Konfiguration und Ansteuerung des Formmittels (21), insbesondere der Dorne (22,23) kann abweichend vom gezeigten Ausführungsbeispiel variieren und die Zahl und Anordnung von getrennt beweglichen Dornen (22,23) oder anderen Komponenten eines Formmittels (21) kann abgewandelt werden.

Wenn ausgehend von der Strangbildung gemäß Figur 3 und 4 beim nächsten Presshub und Vorschub des Pressstempels (17) das Formmittel (21), insbesondere die Dorne (22), wieder gemäß Figur 2 ausgefahren und in den Füll- und Pressraum (12) temporär eingebracht werden, wird erneut ein Strangpressabschnitt (20) mit ein oder mehreren inneren röhrenartigen Hohlräumen (29) gebildet.

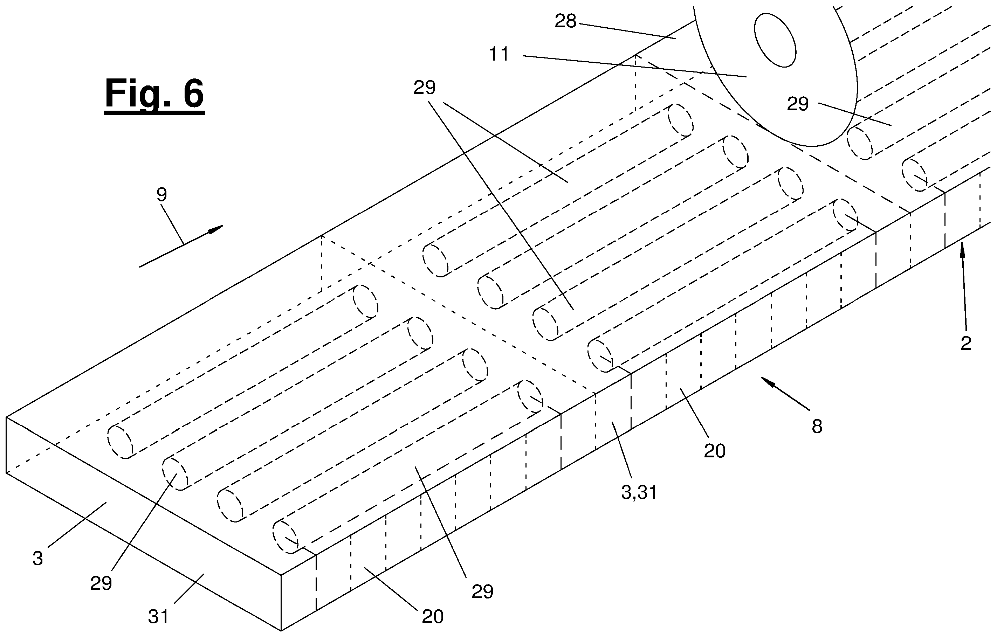

Figur 6 verdeutlicht diese Ausbildung eines Strangs (8) und eines hieraus hergestellten Strangpressprodukts (2). Im Strang (8) sind in Strangpressrichtung (9) gesehen mehrere innere röhrenartige und stirnseitig verschlossene Hohlräume (29) mit axialem Abstand hintereinander angeordnet, wobei sich zwischen diesen aufeinander folgenden Hohlräumen (29) jeweils ein massiver Strangbereich (31) aus Pressgut (3) befindet. Figur 6 verdeutlicht auch die bevorzugt intermittierend gebildeten Strangpressabschnitte (20). Der massive Strangbereich (31) wird **z.B.** von zwei aufeinander folgenden massiven Strangpressabschnitten (20) gebildet. Diese Zahl kann nach oben und unten variieren.

Die Behandlungseinrichtung (10) ist der Strangpresse (7) in Strangpressrichtung (9) nachgeordnet. Sie befindet sich am Presskanal (13) und kann in unterschiedlicher Weise ausgebildet sein.

Die Behandlungseinrichtung (10) kann **z.B.** eine in Figur 1 der Strangpresse (7) unmittelbar oder mit einem kleinen Abstand nachgeordnete Einrichtung zum Aktivieren oder Aushärten des Bindemittels im Pressgut (3) aufweisen. Diese Einrichtung kann zum Beispiel eine Bedampfungseinrichtung, eine Hochfrequenzheizung oder eine andere Einrichtung zur Einbringung von Wärme in den Strang (8) sein. Bei der Bedampfung kann Sattdampf oder hochgespannter Dampf von außen in den Strang (8) eingebracht werden und kann hier ggf. kondensieren. Eine Hochfrequenzheizung eignet sich besonders für ein organisches Bindemittel der genannten Art. Durch die Einbringung von Wärme wird das Bindemittel ausgehärtet oder polymerisiert. Andere Arten von Bindemittel können auf andere Weise aktiviert werden.

Die Behandlungseinrichtung (10) kann eine Kühleinrichtung für den Strang (8) aufweisen. Diese kann **z.B.** der Aktivierungs- oder Aushärteeinrichtung in Strangpressrichtung (9) nachgeschaltet sein. Hier wird der zuvor beim Aktivieren oder Aushärten aufgeheizte Strang (8) wieder abgekühlt. Die Abkühlung kann durch Luftzufuhr oder durch aktive Kühlelemente, **z.B.** wassergekühlte Kanalwände oder dgl. erfolgen.

Die Behandlungseinrichtung (10) kann eine Bremseinrichtung für den Strang (8) aufweisen. Diese kann **z.B.** von beweglich angeordneten seitlichen Wänden des Presskanals (13) und von steuerbaren Zustellmitteln gebildet werden. Diese werden derart gesteuert, dass zum Anpressen und Verdichten eines (20) der Strang (9) temporär gebremst und dann wieder freigegeben wird, sodass das Pressorgan (15) den Strang (8) weiterschieben und den verdichteten Strangpressabschnitt (20) aus dem Füll- und Pressraum (12) befördern kann.

Die Behandlungseinrichtung (10) kann ein oder mehrere weitere Komponenten aufweisen. Dies können zum Beispiel Messeinrichtungen für die Strangdichte, die Strangfeuchtigkeit oder andere Strangparameter sein. Ferner kann eine Auftragvorrichtung für eine Oberflächenbeschichtung, **z.B.** einen Lack, auf dem Strang (8) vorhanden sein. Im weiteren kann eine Messeinrichtung für den Strangvorschub vorhanden sein. Eine solche Messeinrichtung kann auch der Trenneinrichtung (11) zugeordnet sein.

Die Trenneinrichtung (11) trennt mit einem geeigneten Trennmittel, **z.B.** einem Kreissägeblatt, einem Sägeband oder dgl., den Strang (8) an axial beabstandeten Stellen ab und bildet dabei ein oder mehrere Strangpressprodukte (2). Das Abtrennen kann durch einen Trennschnitt oder auf andere Weise erfolgen, **z.B.** durch Strahlschneiden, Erodieren oder dgl.. Das Trennen des Strangs (9) erfolgt in einer Richtung quer zur Strangpressrichtung (9), wobei der Strang (8) durchgetrennt wird. Aus dem Strang (8) werden hierbei Strangpressprodukte (2) herausgeschnitten, welche die gleiche Querschnittsform und Querschnittsgröße wie der Strang (8) haben. Die vom fortlaufenden Strang (8) abgetrennten Strangpressprodukte (2) können vereinzelt, geprüft und und mit einem Förderer abgeführt werden.

Die Trenneinrichtung (11) kann derart gesteuert sein, dass das Abtrennen gemäß Figur 6 jeweils an einem massiven Strangbereich (31) erfolgt. Das hierbei gebildete Strangpressprodukt (2) erhält dadurch in Strangpressrichtung (9) gesehen massive und **z.B.** geschlossene Stirnseiten sowie ein oder mehrere im Inneren des Korpus (28) des Strangpressprodukts (2) angeordnete und abgekapselte, röhrenartige Hohlräume (29). Die Steuerung kann in Abhängigkeit vom Strangvorschub erfolgen.

Der Strang (8) und das Strangpressprodukt (2) können eine beliebig geeignete Querschnittsform haben. Der Strang (8) und die Strangpressprodukte (2) können **z.B.** plattenartig ausgebildet sein, wobei im Querschnitt ihre Breite größer als ihre Höhe ist. Der Strang (8) und die Strangpressprodukte (2) können ebene oder profilierte Außenwände aufweisen.

Das Trennmittel (11) kann außer einer Quertrennung auch ein Längstrennen des Strangs (8) entlang der Strangpressrichtung (9) bzw. der Strangachse bewirken. Ein solcher Trennschnitt kann aufrecht bzw. vertikal und/oder liegend bzw. horizontal gereichtet sein. Durch eine solche Längstrennung können aus dem Strang (8) mit einer gegebenen Querschnittsgröße mehrere Strangpressprodukte (2) abgetrennt werden, die jeweils eine kleinere Querschnittsgröße aufweisen. Figur 7 verdeutlicht diese Ausgestaltung.

Die genannten inneren röhrenartigen Hohlräume (29) mit stirnseitigem Verschluss oder durchgehenden Hohlräumen (30) können in beliebiger Zahl und an beliebiger Stelle im Korpus (28) des Strangs (8) und der Strangpressprodukte (28) des Strangs (8) und der Strangpressprodukte (2) angeordnet sein. Die Querschnittsform dieser Hohlräume (29,30) kann ebenfalls beliebig gewählt werden. Figur 8 verdeutlicht verschiedene Ausführungsformen hinsichtlich Querschnittsform und Lage solcher Hohlräume (29,30).

Figur 9 zeigt einen Strang (8) bzw. Strangpressprodukte (2) mit profilierten Seitenwänden. Zur Bildung dieser Querschnittsprofilierung können der Füll- und Pressraum (12) sowie der Presskanal (13) entsprechend ausgebildet sein.

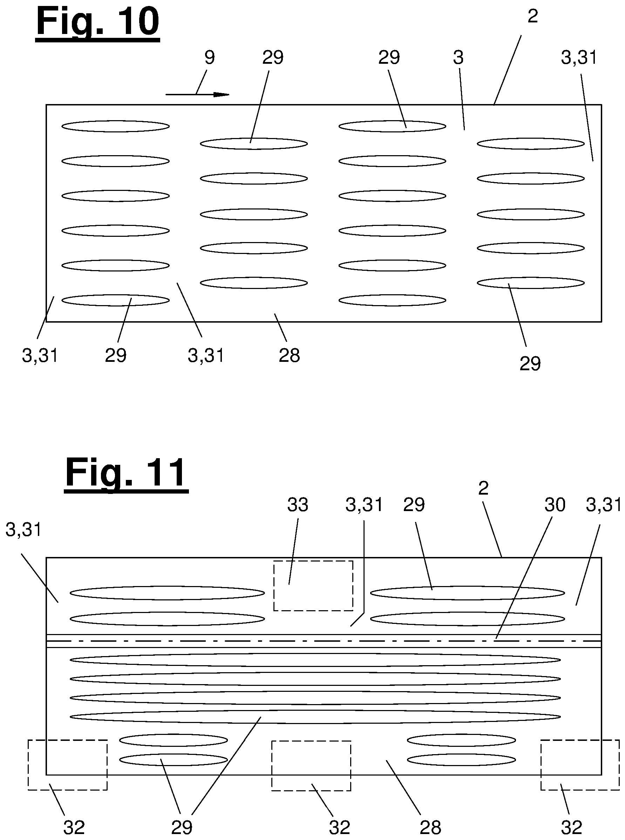

Figur 10 und 11 verdeutlichen bevorzugte Ausführungsformen eines Strangpressprodukts (2). Dieses hat **z.B.** eine längliche und rechteckige Quaderform. Es kann **z.B.** als Türblatt ausgebildet sein.

Figur 10 verdeutlicht eine variierende Anordnung von inneren röhrenartigen und stirnseitig verschlossenen Hohlräumen (29). Hierbei sind in Längsrichtung des Strangpressprodukts (2) bzw. in Strangpressrichtung (9) mehrere solcher Hohlräume (29) hintereinander angeordnet. Außerdem sind mehrere dieser Hohlräume (29) quer dazu nebeneinander angeordnet. Die Hohlräume (29) haben gegenseitig einen axialen Abstand und auch einen seitlichen Versatz. Zwischen den jeweils hintereinander angeordneten Hohlräumen (29) sind jeweils massive Strangbereiche (31) aus Pressgut (3) angeordnet. Massive Strangbereiche (31) befinden sich außerdem an den stirnseitigen Enden und auch an den Längsseiten des Strangpressprodukts (2). Zwischen den parallelen Hohlräumen (29) ist ebenfalls ein massiver Bereich aus Pressgut (3) angeordnet.

Figur 11 verdeutlicht eine weitere Variante, bei der verschiedene innere röhrenartige und stirnseitig verschlossene Hohlräume (29) mit Versatz im Korpus (28) angeordnet sind. Die Hohlräume (29) unterscheiden sich in ihrer Länge und ggf. auch in ihrer Querschnittsform. Figur 11 verdeutlicht außerdem einen einzelnen und über die Gesamtproduktlänge durchgehenden sowie an beiden Stirnseiten offenen, inneren, röhrenartigen Hohlraum (30). Dieser kann auch mehrfach vorhanden sein.

Gemäß Figur 11 können die stirnseitig verschlossenen inneren, röhrenartigen Hohlräume (29) mit einer derartigen Verteilung angeordnet sein, dass am Strangpressprodukt (2) massive Strangbereiche gebildet werden, die als Beschlagbereiche (32,33) geeignet sind. Die stirnseitig verschlossenen Hohlräume (29) können hierfür **z.B. in** Axialrichtung entsprechend voneinander beabstandet sein. Die Beschlagbereiche (32) können sich **z.B.** am einen Längsrand des Strangpressprodukts (2) bzw. Türblatts mit verteilter Anordnung befinden. Sie können zur Montage von Türangeln oder anderen Lagerungen dienen. Ein **z.B.** an der anderen Längsseite angeordneter Beschlagbereich (33) kann axial im mittleren Türblattbereich angeordnet sein und kann **z.B.** zur Aufnahme eines Türschlosses dienen.

Abwandlungen der beschriebenen und gezeigten Ausführungsformen sind in verschiedener Weise möglich. Insbesondere können die Merkmale der vorbeschriebenen Ausführungsformen und der genannten Varianten im Rahmen der Ansprüche in beliebiger Weise miteinander kombiniert und ggf. auch vertauscht werden.

Das Formmittel (21) kann alternativ einen oder mehrere ausfahrbare Bohrer oder andere Werkzeuge aufweisen, die beim Strangpressen oder nachträglich in einem Strangpressabschnitt (20) jeweils einen inneren röhrenartigen Hohlraum (29,30) bilden. In weiterer Abwandlung können statt der vorbeschriebenen formsteifen Dorne (22,23) formlabile und bedarfsweise im hohlraumbildenden Volumen veränderbare Vorrichtungen, **z.B.** aufblasbare Schläuche oder dgl., eingesetzt werden.

Die Zuführvorrichtung (5) kann in einer Abwandlung verschiedene Arten von Pressgut (3) dem Füll- und Pressraum (12) zuführen. Die Unterschiede können in verschiedenen Partikelgrößen, verschiedenen Materialien oder dgl. liegen. Bei der Zuführung des Pressguts (5) kann eine Schichtbildung im Füll- und Pressraum (12) erfolgen. Die Zuführvorrichtung (5) kann hierfür entsprechend konstruktiv und funktional angepasst werden. Wenn die Schließvorrichtung (14), insbesondere ein Schließschieber, an der Pressgutzuführung beteiligt ist, kann auch sie entsprechend ausgebildet und gesteuert werden, z.B. durch Anordnung von mehreren, jeweils Pressgutspezifischen Schließschiebern.

### BEZUGSZEICHENLISTE

- 1: Strangpresseinrichtung
- 2: Strangpressprodukt
- 3: Pressgut
- 4: Aufbereitungseinrichtung Pressgut
- 5: Zuführvorrichtung Pressgut
- 6: Dosiereinrichtung
- 7: Strangpresse
- 8: Strang
- 9: Strangpressrichtung
- 10: Behandlungseinrichtung
- 11: Trenneinrichtung, Säge
- 12: Füll- und Pressraum
- 13: Presskanal
- 14: Schließvorrichtung, Schließschieber
- 15: Pressorgan
- 16: Presskopf
- 17: Pressstempel
- 18: Stirnwand
- 19: Pressantrieb, Zylinder
- 20: Pressabschnitt, Hubstrecke
- 21: Formmittel
- 22: Dorn
- 23: Dorn
- 24: Zustelleinrichtung Formmittel
- 25: Formhalter
- 26: Antrieb, Zylinder
- 27: Steuerung
- 28: Korpus
- 29: Hohlraum verschlossen
- 30: Hohlraum offen
- 31: Strangbereich massiv
- 32: Beschlagbereich
- 33: Beschlagbereich

## Patentansprüche

1. Strangpresseinrichtung für Pressgut (3), welches mit Bindemittel versehene lose pflanzliche Kleinteile, insbesondere Holzspäne, aufweist, wobei die Strangpresseinrichtung (1) eine Strangpresse (7) aufweist, welche das zugeführte lose Pressgut (3) verpresst und zu einem Strang (8) formt sowie in einer Strangpressrichtung (9) vorschiebt, wobei die Strangpresse (7) ein Formmittel (21) aufweist, das in dem Strang (8) in Strangpressrichtung (9) ein oder mehrere innere röhrenartige Hohlräume bildet, **dadurch gekennzeichnet, dass** die Strangpresse (7) dazu ausgebildet ist, beim Strangpressen einen fortlaufenden Strang (8) mit ein oder mehreren inneren röhrenartigen Hohlräumen (29) zu formen, welche stirnseitig vom Pressgut (3) verschlossen sind, wobei die Strangpresse (7) einen Füll- und Pressraum (12) zur Aufnahme und Verpressung des zugeführten losen Pressguts (3) aufweist, wobei die Strangpresse (7) eine Zustelleinrichtung (24) aufweist, die das Formmittel (21) beim Strangpressen zur Hohlraumbildung temporär in den Füll- und Pressraum (12) einbringt und zum Hohlraumverschluss temporär aus dem Füll- und Pressraum (12) entfernt.

2. Strangpresseinrichtung nach Anspruch 1, **dadurch gekennzeichnet, dass** die Strangpresse (7) dazu ausgebildet ist, beim Strangpressen einen fortlaufenden Strang (8) zu formen, der jeweils einen massiven Strangbereich (31) an einem oder beiden Stirnenden der ein oder mehreren inneren röhrenartigen Hohlräume (29) aufweist und/oder der jeweils einen massiven Strangbereich (31) zwischen in Strangpressrichtung (9) aufeinander folgenden inneren röhrenartigen Hohlräumen (29) aufweist.

3. Strangpresseinrichtung nach einem der vorhergehenden Ansprüche, **dadurch gekennzeichnet, dass** die Zustelleinrichtung (24) das Formmittel (21) in Strangpressrichtung (9) reversierend und gesteuert antreibt, wobei das Formmittel (21) einen oder mehrere in Strangpressrichtung (9) ausgerichtete Dorne (22,23) aufweist, wobei bevorzugt mehrere Dorne (22,23) unabhängig voneinander beweglich angeordnet und steuerbar sind.

4. Strangpresseinrichtung nach einem der vorhergehenden Ansprüche, **dadurch gekennzeichnet, dass** die Strangpresse (7) ein angetriebenes Pressorgan (15) aufweist, welches das lose Pressgut (3) bevorzugt intermittierend verpresst und in Strangpressrichtung (9) vorschiebt, wobei das Pressorgan (15) einen reversierend angetriebenen Presskopf (16) mit einem in Strangpressrichtung (9) ausgerichteten und in den Füll- und Pressraum (12) eintauchfähigen Pressstempel (17) aufweist, wobei bevorzugt das Formmittel (21) im oder am Pressstempel (17) reversierend ausfahrbar angeordnet ist.

5. Strangpresseinrichtung nach einem der vorhergehenden Ansprüche, **dadurch gekennzeichnet, dass** die Strangpresse (7) eine Zuführvorrichtung (5) für das lose Pressgut (3) aufweist, welche eine Dosiervorrichtung (6) für das lose Pressgut (3) aufweist, welche die Befüllung des Füll- und Pressraums (12) in Abhängigkeit von Anwesenheit oder Fehlen des Formmittels (21) im Füll- und Pressraum (12) steuert.

6. Strangpresseinrichtung nach einem der vorhergehenden Ansprüche, **dadurch gekennzeichnet, dass** die Strangpresseinrichtung (1) eine der Strangpresse (7) nachgeschaltete Behandlungseinrichtung (10) mit einer Aushärtestrecke und ggf. einer Kühlstrecke für den Strang (8) aufweist.

7. Strangpresseinrichtung nach einem der vorhergehenden Ansprüche, **dadurch gekennzeichnet, dass** die Strangpresseinrichtung (1) eine der Strangpresse (7) nachgeschaltete Trenneinrichtung (11) für den Strang (8) aufweist, welche derart gesteuert ist, dass die Trennung, insbesondere Quertrennung, des Strangs (8) an einem massiven Strangbereich (31) erfolgt.

8. Verfahren zum Herstellen eines Strangpressprodukts (2) mit einer Strangpresseinrichtung (1) aus einem Pressgut (3), welches mit Bindemittel versehene lose pflanzliche Kleinteile, insbesondere Holzspäne, aufweist, wobei mittels einer Strangpresse (7) das zugeführte lose Pressgut (3) verpresst, zu einem Strang (8) geformt sowie in einer Strangpressrichtung (9) vorgeschoben wird, wobei beim Strangpressen in dem Strang (8) in Strangpressrichtung (9) ein oder mehrere innere röhrenartige Hohlräume gebildet werden, **dadurch gekennzeichnet, dass** das Verfahren mit einer Strangpresseinrichtung (1) gemäß einem der Ansprüche 1 bis 7 durchgeführt wird, wobei beim Strangpressen ein oder mehrere innere röhrenartige Hohlräume (29) im fortlaufenden Strang (8) stirnseitig mit dem Pressgut (3) verschlossen werden.

9. Verfahren nach Anspruch 8, **dadurch**
**gekennzeichnet, dass** beim Strangpressen ein fortlaufender Strang (8) gebildet wird, der jeweils einen massiven Strangbereich (31) an einem oder beiden Stirnenden der ein oder mehreren inneren röhrenartigen Hohlräume (29) aufweist und/oder der jeweils einen massiven Strangbereich (31) zwischen in Strangpressrichtung (9) aufeinander folgenden inneren röhrenartigen Hohlräumen (29,30) aufweist.

10. Verfahren nach Anspruch 8 oder 9, **dadurch**
**gekennzeichnet, dass** beim Strangpressen in dem Strang (8) in Strangpressrichtung (9) mit Versatz zueinander ein oder mehrere stirnseitig mit dem Pressgut (3) verschlossene, innere röhrenartige Hohlräume (29) gebildet werden und/oder dass beim Strangpressen ein oder mehrere innere röhrenartige Hohlräume (29) mit einem Medium befüllt werden.

11. Verfahren nach einem der Ansprüche 8 bis 10, **dadurch**
**gekennzeichnet, dass** aus dem fortlaufenden Strang (8) mehrere Strangpressprodukte (2) abgetrennt werden.

12. Strangpressprodukt aus einem stranggepressten Pressgut (3), welches mit Bindemittel versehene pflanzliche Kleinteile, insbesondere Holzspäne, aufweist, wobei das Strangpressprodukt (2) ein oder mehrere innere röhrenartige Hohlräume aufweist, die in einer Strangpressrichtung (9) ausgerichtet sind, **dadurch gekennzeichnet, dass** das Strangpressprodukt (2) mit einem Verfahren gemäß einem der Ansprüche 8 - 11 hergestellt ist und ein oder mehrere innere röhrenartige Hohlräume (29) aufweist, die stirnseitig durch das Pressgut (3) verschlossen sind.

13. Strangpressprodukt nach Anspruch 12, **dadurch**
**gekennzeichnet, dass** das Strangpressprodukt (2) jeweils einen massiven Strangbereich (31) an einem oder beiden Stirnenden der ein oder mehreren inneren röhrenartigen Hohlräume (29) aufweist und/oder jeweils einen massiven Strangbereich (31) zwischen in Strangpressrichtung (9) aufeinander folgenden inneren röhrenartigen Hohlräumen (29) aufweist.

14. Strangpressprodukt nach Anspruch 12 oder 13, **dadurch**
**gekennzeichnet, dass** das Strangpressprodukt (2) ein oder mehrere innere, stirnseitig verschlossene röhrenartige Hohlräume (29) aufweist, die mit Versatz zueinander angeordnet sind.

15. Strangpressprodukt nach einem der Ansprüche 12 bis 14, **dadurch gekennzeichnet, dass** das Strangpressprodukt (2) plattenartig ausgebildet ist, insbesondere als Türblatt, als Regalbrett oder dgl..

## Claims

1. Extrusion press device for pressed material (3) which has loose vegetable small parts, in particular wood chips, provided with a binding agent, wherein the extrusion press device (1) has an extrusion press (7) which compresses the supplied loose pressed material (3) and forms it into a strand (8) and advances it in an extrusion direction (9), wherein the extrusion press (7) has a moulding means (21) which forms one or a plurality of inner tubular cavities in the strand (8) in the extrusion direction (9), **characterized in that** the extrusion press (7) during extruding is designed to form a continuous strand (8) with one or a plurality of inner tubular cavities (29) that are closed on the end side of the pressed material (3), wherein the extrusion press (7) has a filling and pressing chamber (12) for receiving and pressing the supplied loose pressed material (3), wherein the extrusion press (7) has an actuating device (24) which temporarily inserts the moulding means (21) into the filling and pressing chamber (12) for forming the cavities during extruding, and temporarily removes it from the filling and pressing chamber (12) for closing the cavities.

2. Extrusion press device according to Claim 1, **characterized in that** the extrusion press (7) during extruding is designed to form a continuous strand (8) which in each case has a solid strand region (31) at one or both ends of the one or the plurality of inner tubular cavities (29) and/or which in each case has a solid strand region (31) between successive inner tubular cavities (29) in the extrusion direction (9).

3. Extrusion press device according to one of the preceding claims, **characterized in that** the actuating device (24) drives the moulding means (21) in a reversible and controlled manner in the extrusion direction (9), wherein the moulding means (21) has one or more mandrels (22, 23) aligned in the extrusion direction (9), wherein preferably several mandrels (22, 23) are arranged movably independently of each other and are controllable.

4. Extrusion press device according to one of the preceding claims, **characterized in that** the extrusion press (7) has a driven pressing member (15) which preferably compresses the loose pressed material (3) intermittently and advances it in the extrusion direction (9), wherein the pressing member (15) has a reversingly driven pressing head (16) with a pressing ram (17) which is aligned in the extrusion direction (9) and is capable of plunging into the filling and pressing chamber (12), wherein preferably the moulding means (21) is disposed so as to be reversingly deployable in or on the pressing ram (17).

5. Extrusion press device according to one of the preceding claims, **characterized in that** the extrusion press (7) has a feeding device (5) for the loose pressed material (3), which has a metering device (6) for the loose pressed material (3) that controls the filling of the filling and pressing chamber (12) as a function of the presence or absence of the moulding means (21) in the filling and pressing chamber (12).

6. Extrusion press device according to one of the preceding claims, **characterized in that** the extrusion press device (1) has downstream of the extrusion press (7) a treatment device (10) with a curing section and optionally a cooling section for the strand (8).

7. Extrusion press device according to one of the preceding claims, **characterized in that** the extrusion press device (1) has downstream of the extrusion press (7) a separating device (11) for the strand (8), which is controlled in such a manner that the separation, in particular transverse separation, of the strand (8) takes place at a solid strand region (31).

8. Method for producing an extruded product (2) with an extrusion press device (1) from a pressed material (3) which has loose vegetable small parts, in particular wood chips, provided with a binding agent, wherein the supplied loose pressed material (3) is pressed by means of an extrusion press (7), formed into a strand (8) and advanced in an extrusion direction (9), wherein during extruding one or a plurality of inner tubular cavities are formed in the strand (8) in the extrusion direction (9), **characterized in that** the method is carried out with an extrusion press device (1) according to one of Claims 1 to 7, wherein during extruding one or a plurality of inner tubular cavities (29) in the continuous strand (8) are closed at the end side with the pressed material (3).

9. Method according to Claim 8, **characterized in that** a continuous strand (8) is formed during extruding, which in each case has a solid strand region (31) at one or both ends of the one or the plurality of inner tubular cavities (29) and/or which in each case has a solid strand region (31) between successive inner tubular cavities (29, 30) in the extrusion direction (9).

10. Method according to Claim 8 or 9, **characterized in that** during extruding one or a plurality of inner tubular cavities (29), which are closed at the end side with the pressed material (3), are formed in the strand (8) in the extrusion direction (9) so as to be mutually offset, and/or **in that** during extruding one or a plurality of inner tubular cavities (29) are filled with a medium.

11. Method according to one of Claims 8 to 10, **characterized in that** a plurality of extruded products (2) are severed from the continuous strand (8).

12. Extruded product from an extruded pressed material (3) which has vegetable small parts, in particular wood chips, provided with a binding agent, wherein the extruded product (2) has one or a plurality of inner tubular cavities which are aligned in an extrusion direction (9), **characterized in that** the extruded product (2) is produced by a method according to one of Claims 8 to 11 and has one or a plurality of inner tubular cavities (29) which are closed at the end side by the pressed material (3).

13. Extruded product according to Claim 12, **characterized in that** the extruded product (2) in each case has a solid strand region (31) at one or both ends of the one or the plurality of inner tubular cavities (29) and/or in each case has a solid strand region (31) between successive inner tubular cavities (29) in the extrusion direction (9).

14. Extruded product according to Claim 12 or 13, **characterized in that** the extruded product (2) has one or a plurality of inner tubular cavities (29) which are closed at the end side and are disposed so as to be mutually offset.

15. Extruded product according to one of Claims 12 to 14, **characterized in that** the extruded product (2) is designed in the manner of a board, in particular as a door leaf, as a shelf or the like.

## Revendications

1. Presse de filage par extrusion de matière à presser (3) qui présente des fragments végétaux en vrac, en particulier des copeaux de bois, munis de liant, la presse de filage par extrusion (1) présentant une presse de filage (7) qui comprime la matière à presser (3) en vrac introduite, la met en forme sous forme d'un extrudat (8) et la fait avancer dans une direction de filage par extrusion (9), la presse de filage (7) présentant un moyen de formage (21) qui forme une ou plusieurs cavités tubulaires internes dans l'extrudat (8) dans la direction de filage par extrusion (9), **caractérisée en ce que** la presse de filage (7) est conçue pour former un extrudat (8) continu lors du filage par extrusion avec une ou plusieurs cavités (29) tubulaires internes qui sont fermées au niveau de leurs faces frontales par la matière à presser (3), la presse de filage (7) présentant une chambre de remplissage et de pressage (12) destinée à recevoir et à comprimer la matière à presser (3) en vrac introduite, la presse de filage (7) présentant un dispositif de mise en position (24) qui permet d'introduire temporairement le moyen de formage (21) dans la chambre de remplissage et de pressage (12) lors du filage par extrusion en vue de la formation d'une cavité et de le retirer temporairement de la chambre de remplissage et de pressage (12) en vue de la fermeture de la cavité.

2. Presse de filage par extrusion selon la revendication 1, **caractérisée en ce que** la presse de filage (7) est conçue pour former un extrudat (8) continu lors du filage par extrusion, lequel extrudat présente à chaque fois une zone d'extrudat (31) massive au niveau d'une ou des deux faces d'extrémité de la ou des plusieurs cavités (29) tubulaires internes et/ou présente dans chaque cas une zone d'extrudat (31) massive entre des cavités (29) tubulaires internes qui se succèdent dans la direction de filage par extrusion (9).

3. Presse de filage par extrusion selon l'une quelconque des revendications précédentes, **caractérisée en ce que** le dispositif de mise en position (24) entraîne le moyen de formage (21) de manière réversible et commandée dans la direction de filage par extrusion (9), le moyen de formage (21) présentant un ou plusieurs mandrins (22, 23) orientés dans la direction de filage par extrusion (9), de préférence plusieurs mandrins (22, 23) étant disposés de manière mobile et pouvant être commandés indépendamment les uns des autres.

4. Presse de filage par extrusion selon l'une quelconque des revendications précédentes, **caractérisée en ce que** la presse de filage (7) présente un organe de compression (15) entraîné, lequel comprime la matière à presser (3) en vrac de préférence par intermittence et la fait avancer dans la direction de filage par extrusion (9), l'organe de compression (15) présentant une tête de pressage (16) entraînée de manière réversible, avec un piston de pressage (17) orienté dans la direction de filage par extrusion (9) et pouvant être enfoncé dans la chambre de remplissage et de pressage (12), le moyen de formage (21) étant disposé de préférence de manière à pouvoir être sorti de manière réversible dans ou au niveau du piston de pressage (17).

5. Presse de filage par extrusion selon l'une quelconque des revendications précédentes, **caractérisée en ce que** la presse de filage (7) présente un dispositif d'alimentation (5) pour la matière à presser (3) en vrac, lequel présente un dispositif doseur (6) pour la matière à presser (3) en vrac, lequel commande le remplissage de la chambre de remplissage et de pressage (12) en fonction de la présence ou de l'absence du moyen de formage (21) dans la chambre de remplissage et de pressage (12).

6. Presse de filage par extrusion selon l'une quelconque des revendications précédentes, **caractérisée en ce que** la presse de filage par extrusion (1) présente un dispositif de traitement (10) monté en aval de la presse de filage (7) et comportant une section de durcissement et, le cas échéant, une section de refroidissement pour l'extrudat (8).

7. Presse de filage par extrusion selon l'une quelconque des revendications précédentes, **caractérisée en ce que** la presse de filage par extrusion (1) présente, en aval de la presse de filage (7), un dispositif de séparation (11) pour l'extrudat (8), lequel dispositif de séparation est commandé de telle sorte que la séparation, en particulier la séparation transversale, de l'extrudat (8) s'effectue au niveau d'une zone d'extrudat (31) massive.

8. Procédé de fabrication d'un produit extrudé (2) à l'aide d'une presse de filage par extrusion (1) à partir d'une matière à presser (3), laquelle présente des fragments végétaux en vrac, en particulier des copeaux de bois, munis de liant, dans lequel la matière à presser (3) en vrac introduite est comprimée au moyen d'une presse de filage (7), formée en un extrudat (8) et avancée dans une direction de filage par extrusion (9), dans lequel, lors du filage par extrusion, une ou plusieurs cavités tubulaires internes sont formées dans l'extrudat (8) dans la direction de filage par extrusion (9), **caractérisé en ce que** le procédé est mis en œuvre avec une presse de filage par extrusion (1) selon l'une quelconque des revendications 1 à 7, dans lequel, lors du filage par extrusion, une ou plusieurs cavités (29) tubulaires internes dans l'extrudat (8) continu sont fermées au niveau de leurs faces frontales par le matériau à presser (3).

9. Procédé selon la revendication 8, **caractérisé en ce que** lors du filage par extrusion, un extrudat (8) continu est formé, lequel présente à chaque fois une zone d'extrudat (31) massive au niveau d'une ou des deux faces d'extrémité de la ou des plusieurs cavités (29) tubulaires internes et/ou présente à chaque fois une zone d'extrudat (31) massive entre des cavités (29, 30) tubulaires internes qui se succèdent dans la direction de filage par extrusion (9).

10. Procédé selon la revendication 8 ou 9, **caractérisé en ce que** lors du filage par extrusion, dans l'extrudat (8), dans la direction de filage par extrusion (9), une ou plusieurs cavités (29) tubulaires internes fermées au niveau de leurs faces frontales par la matière à presser (3) sont formées de manière décalée les unes par rapport aux autres et/ou **en ce que** lors du filage par extrusion, une ou plusieurs cavités (29) tubulaires internes sont remplies d'un milieu.

11. Procédé selon l'une quelconque des revendications 8 à 10, **caractérisé en ce que** plusieurs produits extrudés (2) sont séparés de l'extrudat (8) continu.

12. Produit extrudé en une matière à presser (3) comprimée par filage par extrusion qui présente des fragments végétaux, en particulier des copeaux de bois, munis de liant, le produit extrudé (2) présentant une ou plusieurs cavités tubulaires internes qui sont orientées dans une direction de filage par extrusion (9), **caractérisé en ce que** le produit extrudé (2) est produit par le biais d'un procédé selon l'une quelconque des revendications 8 à 11 et comporte une ou plusieurs cavités (29) tubulaires internes qui sont fermées au niveau de leurs faces frontales par la matière à presser (3).

13. Produit extrudé selon la revendication 12, **caractérisé en ce que** le produit extrudé (2) présente à chaque fois une zone d'extrudat (31) massive au niveau d'une ou des deux faces d'extrémité de la ou des plusieurs cavités (29) tubulaires internes et/ou présente à chaque fois une zone d'extrudat (31) massive entre des cavités (29) tubulaires internes qui se succèdent dans la direction de filage par extrusion (9).

14. Produit extrudé selon la revendication 12 ou 13, **caractérisé en ce que** le produit extrudé (2) présente une ou plusieurs cavités (29) tubulaires internes fermées au niveau de leurs faces frontales, qui sont disposées de manière décalée les unes par rapport aux autres.

15. Produit extrudé selon l'une quelconque des revendications 12 à 14, **caractérisé en ce que** le produit extrudé (2) est réalisé en forme de plaque, en particulier sous forme de vantail de porte, de tablette d'étagère ou analogue.
